(19) Europäisches Patentamt / European Patent Office / Office européen des brevets

(11) **EP 2 807 473 B1**

(12) **FASCICULE DE BREVET EUROPEEN**

(45) Date de publication et mention de la délivrance du brevet:
**30.03.2016 Bulletin 2016/13**

(21) Numéro de dépôt: **13704158.8**

(22) Date de dépôt: **15.01.2013**

(51) Int Cl.:
***G01N 23/20*** *(2006.01)*

(86) Numéro de dépôt international:
**PCT/FR2013/050091**

(87) Numéro de publication internationale:
**WO 2013/110879 (01.08.2013 Gazette 2013/31)**

(54) **DISPOSITIF DE TRAITEMENT DE MESURES DE DIFFRACTION DE RAYONS X SUR DES PIÈCES AYANT SUBI UN TRAITEMENT INDUISANT DES CONTRAINTES, ET APPAREIL D'ANALYSE ASSOCIÉ**

VORRICHTUNG ZUR VERARBEITUNG VON RÖNTGENSTREUMESSUNGEN AUF EINER BELASTENDEN BEHANDLUNG UNTERZOGENEN TEILEN UND ZUGEHÖRIGE ANALYSEVORRICHTUNG

DEVICE FOR PROCESSING X-RAY DIFFRACTION MEASUREMENTS ON PARTS HAVING UNDERGONE A TREATMENT INDUCING STRESSES, AND ASSOCIATED ANALYSIS APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.01.2012 FR 1250756**

(43) Date de publication de la demande:
**03.12.2014 Bulletin 2014/49**

(73) Titulaire: **Peugeot Citroën Automobiles SA**
**78140 Vélizy Villacoublay (FR)**

(72) Inventeurs:
• **BENOIST, Julien**
**92320 Châtillon (FR)**
• **BAUMHAUER, Emmanuel**
**90000 Belfort (FR)**
• **DESPRINGRE, Nicolas**
**57000 Thionville (FR)**

(74) Mandataire: **Rosenberg, Muriel Sylvie**
**Peugeot Citroën Automobiles SA**
**Propriété Industrielle - LG 081**
**18 rue des Fauvelles**
**92250 La Garenne Colombes (FR)**

(56) Documents cités:
• LUO Q ET AL: "High-precision determination of residual stress of polycrystalline coatings using optimised XRD-sin<2>psi technique", SURFACE AND COATINGS TECHNOLOGY, ELSEVIER, AMSTERDAM, NL, vol. 205, no. 5, 25 novembre 2010 (2010-11-25), pages 1403-1408, XP027507498, ISSN: 0257-8972, DOI: 10.1016/J.SURFCOAT.2010.07.108 [extrait le 2010-08-03]
• CHATTOPADHYAY D K ET AL: "Organic-inorganic hybrid coatings prepared from glycidyl carbamate resins and amino-functional silanes", PROGRESS IN ORGANIC COATINGS, ELSEVIER BV, NL, vol. 63, no. 4, 1 novembre 2008 (2008-11-01), pages 405-415, XP025625130, ISSN: 0300-9440, DOI: 10.1016/J.PORGCOAT.2008.06.009 [extrait le 2008-08-12]
• YAMASHITA ET AL: "Analysis of XPS spectra of Fe<2+> and Fe<3+> ions in oxide materials", APPLIED SURFACE SCIENCE, ELSEVIER, AMSTERDAM, NL, vol. 254, no. 8, 1 février 2008 (2008-02-01), pages 2441-2449, XP022449377, ISSN: 0169-4332, DOI: 10.1016/J.APSUSC.2007.09.063

**Description**

L'invention concerne le domaine de l'analyse de pièces par diffraction de rayons X.

Dans certains domaines techniques, comme par exemple celui des véhicules, éventuellement automobiles, il arrive fréquemment que l'on utilise des pièces réalisées dans un matériau cristallin et présentant des contraintes résiduelles résultant d'un traitement (éventuellement de précontraintes), éventuellement de type thermochimique.

Les traitements dits de précontrainte sont destinés à induire au sein des pièces des contraintes résiduelles, généralement de compression ou de traction, qui sont destinées à compenser au moins partiellement des contraintes externes qu'elles vont subir pendant leurs phases d'utilisation. A titre d'exemple, lorsque l'on sait qu'une pièce en acier va subir des contraintes externes de traction, on va préalablement lui faire subir un traitement de précontrainte, par exemple de type carbonitruration ou cémentation, afin qu'elle présente des contraintes résiduelles de compression. Il est en effet bien connu que la carbonitruration ou cémentation d'une pièce en acier induit des contraintes résiduelles de compression du fait de la transformation martensitique de l'acier sur une certaine épaisseur.

Lorsque de telles pièces jouent un rôle important au sein d'un système ou équipement, il est important de déterminer si le traitement de précontrainte que l'on veut leur faire subir est de nature à induire les contraintes résiduelles escomptées. Pour le déterminer, on analyse ces pièces au moyen d'un appareil d'analyse par diffraction de rayons X.

Il est rappelé qu'un tel appareil d'analyse comprend, d'une part, des moyens d'analyse agencés pour analyser chaque pièce par diffraction de rayons X afin d'obtenir des ensembles de points qui sont représentatifs de mesures d'intensité de diffraction en fonction d'angles de diffraction différents obtenues pour une direction d'analyse parmi plusieurs, et des moyens de traitement agencés pour traiter les ensembles de points de chaque pièce afin de déterminer une contrainte résiduelle qu'elle comprend.

Plus précisément, ces moyens de traitement sont agencés pour assimiler chaque ensemble de points d'une pièce, associé à une direction d'analyse, à une courbe globale, puis pour déterminer pour chaque courbe globale son point d'extrémité (ou extrémum) qui est défini par une position angulaire globale de diffraction, puis pour déterminer un paramètre de déformation de la pièce dans la direction d'analyse à partir de cette position angulaire globale de diffraction déterminée, et enfin pour déterminer une contrainte résiduelle de la pièce à partir de ses paramètres de déformation déterminés dans chacune des directions d'analyse de ses différents ensembles.

La toute dernière détermination est généralement basée sur la méthode dite « des $\sin^2\Psi$ », où l'angle $\Psi$ est l'un des deux angles qui définissent conjointement la direction d'analyse (l'autre angle étant référencé $\Phi$). Cette méthode, bien connue de l'homme de l'art, consiste :

- à placer dans un graphe les points correspondant aux différentes directions d'analyse $(\Phi,\Psi)$ et comprenant chacun la valeur du paramètre de déformation $\varepsilon_{\Phi,\Psi}$ déterminée dans l'une des directions d'analyse $(\Phi,\Psi)$ et la valeur de $\sin^2\Psi$ associée, puis
- à déterminer la pente de l'ellipse qui passe par la plupart de ces points (du fait que le paramètre de déformation $\varepsilon_{\Phi,\Psi}$ est défini par une équation similaire à celle d'une ellipse), puis
- à déterminer la contrainte résiduelle $\sigma_\Phi$ de la pièce en fonction de cette pente.

Il est rappelé que le paramètre de déformation $\varepsilon_{\Phi,\Psi}$ est lié à la contrainte résiduelle $\sigma_\Phi$ par la relation suivante :

$$\varepsilon_{\Phi\Psi} = \frac{1+\upsilon}{E}(\sigma_\Phi - \sigma_{33})\sin^2\psi + \frac{1+\upsilon}{E}\sigma_{33} - \frac{\upsilon}{E}Tr(\sigma) + \frac{1+\upsilon}{E}\tau_\Phi\sin^2\psi$$

.

Si l'on veut obtenir des résultats précis, il faut déterminer avec une (très) bonne précision le point d'extrémité de chacune des courbes globales d'une pièce. Pour ce faire, on peut utiliser une méthode dite « locale », comme par exemple la méthode de la corde ou du barycentre ou encore du maximum, ou bien une méthode dite « de simulation », utilisant par exemple une courbe de distribution gaussienne ou lorentzienne ou « pseudo Voigt » ou encore « Pearson VII ».

Ces méthodes de détermination offrent de bons résultats lorsque la courbe globale est constituée essentiellement d'un pic principal. Mais elles s'avèrent inadaptées aux courbes globales qui présentent un pic central avec un ou plusieurs épaulements, comme c'est par exemple le cas, bien que non limitativement, de la martensite quadratique.

En effet, lorsque la martensite est très quadratique, la contribution de la famille de plans {211} au diagramme de diffraction n'est plus isotrope (car la « quadraticité » n'est pas homogène selon les différentes directions d'analyse $(\Phi,\Psi)$) et donc au moins un épaulement, dû à la déformation de la maille cristalline, vient perturber la détermination de la position angulaire du pic principal de diffraction. En fait, la famille de plans {211} se scinde en familles de plans {211} et {121} qui contribuent au pic principal et en une famille de plans {112} qui contribue à l'épaulement. Or la méthode des $\sin^2\Psi$ s'applique essentiellement aux cas où l'on n'a qu'une famille de plans de diffraction et donc un pic principal sans épaulement.

On comprendra donc que lorsque l'on effectue un traitement inadapté des pics de diffraction cela engendre une erreur de mesure aléatoire de la position angulaire de leur maximum et donc de la distance inter-réticulaire pour chaque direction d'analyse ($\Phi,\Psi$). Les points de mesure se retrouvent dispersés par rapport à l'ellipse théorique, si bien que la pente et la largeur de cette dernière sont potentiellement modifiées, ce qui engendre une erreur significative sur la détermination des contraintes principale et de cisaillement.

L'invention a donc pour but d'améliorer la situation.

Elle propose notamment à cet effet un dispositif dédié au traitement d'ensembles de points qui sont représentatifs de mesures d'intensité de diffraction en fonction d'angles de diffraction différents, obtenues pour une direction d'analyse parmi plusieurs sur une pièce réalisée dans un matériau cristallin et présentant des contraintes résiduelles résultant d'un traitement, chaque ensemble de points étant assimilable à une courbe globale de diffraction comportant un pic principal et au moins un épaulement.

Ce dispositif de traitement se caractérise par le fait qu'il comprend :

- des premiers moyens de traitement agencés pour déterminer pour chaque courbe globale associée à une pièce et à une direction d'analyse, d'une première part, une courbe principale et au moins une courbe secondaire représentatives respectivement du pic central et d'au moins un épaulement de cette courbe globale, et dont une convolution reproduit sensiblement cette courbe globale, d'une deuxième part, un point d'extrémité (ou extrémum) de la courbe globale, défini par une position angulaire globale de diffraction à laquelle correspond une valeur maximale d'intensité de diffraction qui est obtenue à partir d'une combinaison pondérée des valeurs maximales d'intensité de diffraction respectivement des courbe principale et courbe(s) secondaire(s) associées, et, d'une troisième part, un paramètre de déformation de la pièce dans la direction d'analyse à partir de la position angulaire globale de diffraction déterminée, et

- des seconds moyens de traitement agencés pour déterminer une contrainte résiduelle de la pièce à partir de ses paramètres de déformation déterminés dans chacune des directions d'analyse des différents ensembles.

Cela permet d'obtenir une dispersion beaucoup plus faible des valeurs des contraintes résiduelles déterminées sur une même pièce en différents endroits ayant subi un même traitement (éventuellement de précontrainte).

Le dispositif de traitement selon l'invention peut comporter d'autres caractéristiques qui peuvent être prises séparément ou en combinaison, et notamment :

- ses premiers moyens de traitement peuvent être agencés pour utiliser une courbe principale construite à partir d'une combinaison d'une courbe de distribution gaussienne et d'une courbe de distribution lorentzienne ;
  - ➤ ses premiers moyens de traitement peuvent être agencés pour utiliser une courbe principale qui est choisie parmi (au moins) des courbes dites « pseudo Voigt » et des courbes dites « Pearson VII»;

- ses premiers moyens de traitement peuvent être agencés pour utiliser une courbe secondaire construite à partir d'une combinaison d'une courbe de distribution gaussienne et d'une courbe de distribution lorentzienne ;
  - ➤ ses premiers moyens de traitement peuvent être agencés pour utiliser une courbe secondaire qui est choisie parmi (au moins) des courbes dites « pseudo Voigt » et des courbes dites « Pearson VII » ;

- ses premiers moyens de traitement peuvent être agencés pour calculer des première et seconde(s) surfaces inscrites respectivement sous les courbe principale et courbe(s) secondaire(s) qui sont associées à une courbe globale, puis pour déterminer chaque valeur maximale d'intensité de diffraction, correspondant à la position angulaire globale de diffraction, en effectuant la somme, d'une part, de la valeur maximale d'intensité de diffraction de la courbe principale multipliée par le résultat de la division de la première surface par la somme des première et seconde(s) surfaces, et, d'autre part, de chaque valeur maximale d'intensité de diffraction de chaque courbe secondaire multipliée par le résultat de la division de la seconde surface correspondante par la somme des première et seconde(s) surfaces.

L'invention propose également un appareil, destiné à analyser des pièces réalisées dans un matériau cristallin et présentant des contraintes résiduelles résultant d'un traitement, et comprenant, d'une part, des moyens d'analyse agencés pour analyser chaque pièce par diffraction de rayons X afin d'obtenir des ensembles de points représentatifs de mesures d'intensité de diffraction en fonction d'angles de diffraction différents, obtenues pour une direction d'analyse parmi plusieurs, et un dispositif de traitement du type de celui présenté ci-avant et propre à traiter les ensembles de points de chaque pièce afin de déterminer une contrainte résiduelle qu'elle comprend.

L'appareil d'analyse selon l'invention peut comporter d'autres caractéristiques qui peuvent être prises séparément ou en combinaison, et notamment :

- il peut être propre à analyser des pièces ayant subi un traitement choisi parmi (au moins) une carbonitruration à basse pression, une carbonitruration à pression atmosphérique, une cémentation à basse pression, une cémentation à pression atmosphérique, et un grenaillage de précontrainte ;
- il peut être propre à analyser des pièces en acier ;
- il peut être propre à analyser des pièces destinées à équiper des véhicules, éventuellement de type automobile.

D'autres caractéristiques et avantages de l'invention apparaîtront à l'examen de la description détaillée ci-après, et des dessins annexés, sur lesquels :

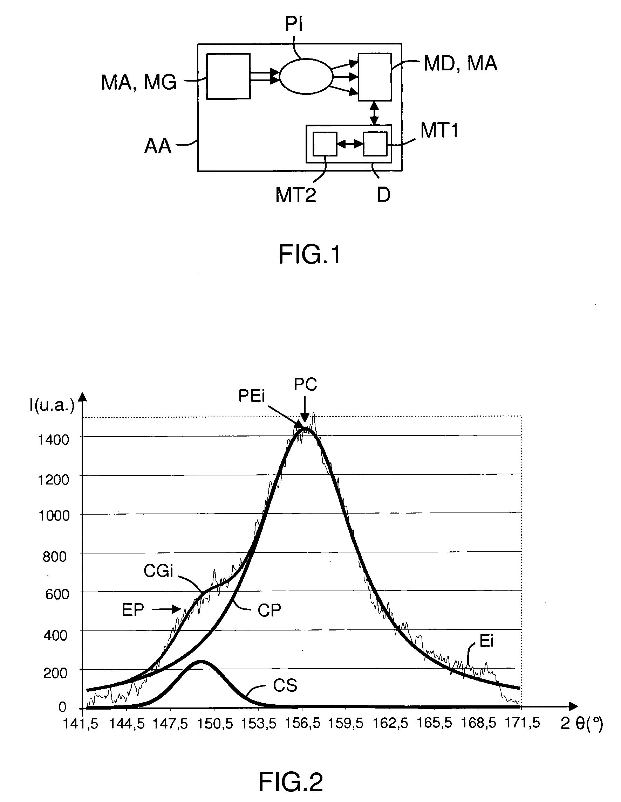

- la figure 1 illustre schématiquement et fonctionnellement un appareil d'analyse équipé d'un exemple de réalisation d'un dispositif de traitement selon l'invention, pendant une phase d'analyse d'une pièce, et
- la figure 2 illustre au sein d'un diagramme un exemple d'ensemble de points représentatifs de mesures d'intensité de diffraction (I en unités arbitraires (ou u.a.)) en fonction d'angles de diffraction ($2\theta$ en degrés) obtenues pour une direction d'analyse, une courbe globale (CGi) assimilable à cet ensemble de points, et des courbes principale (CP) et secondaire (CS) dont la convolution reproduit sensiblement cette courbe globale (CGi).

Les dessins annexés pourront non seulement servir à compléter l'invention, mais aussi contribuer à sa définition, le cas échéant.

L'invention a notamment pour but de proposer un dispositif de traitement D destiné à permettre une détermination de contraintes résiduelles présentes dans une pièce PI réalisée dans un matériau cristallin consécutivement à un traitement induisant des contraintes.

Dans ce qui suit, on considère, à titre d'exemple non limitatif, que les pièces PI sont destinées à équiper un véhicule, éventuellement de type automobile. Mais l'invention n'est pas limitée à cette application. Elle concerne en effet tout type de pièce en matériau cristallin et présentant des contraintes résiduelles résultant d'un traitement (éventuellement de précontrainte).

Par ailleurs, on considère dans ce qui suit, à titre d'exemple non limitatif, que les pièces PI sont réalisées en acier. Mais l'invention n'est pas limitée à ce type de matériau. Elle concerne en effet tout type de matériau cristallin dans lequel on peut créer des contraintes résiduelles au moyen d'un traitement (éventuellement de précontrainte).

De plus, on considère dans ce qui suit, à titre d'exemple non limitatif, que le traitement est de précontrainte, et qu'il a induit une transformation martensitique quadratique de l'acier des pièces PI sur une certaine épaisseur. Mais l'invention n'est pas limitée à ce type de transformation.

Enfin, on considère dans ce qui suit, à titre d'exemple non limitatif, que le traitement de précontrainte subi par les pièces PI est de type thermochimique. Il s'agit par exemple d'une carbonitruration à basse pression ou d'une cémentation à basse pression, éventuellement avec un renforcement en azote. Mais l'invention n'est pas limitée à ce type de traitement de précontrainte. Elle concerne également d'autres traitements thermochimiques, et notamment la carbonitruration à pression atmosphérique et la cémentation à pression atmosphérique, et certains traitements mécaniques, comme par exemple le grenaillage de précontrainte.

On a schématiquement représenté sur la figure 1 un exemple d'appareil d'analyse AA destiné à analyser des pièces PI qui ont été réalisées dans un matériau cristallin et présentent des contraintes résiduelles résultant d'un traitement (ici de précontrainte). Cet appareil AA comprend ici au moins des moyens d'analyse MA et un dispositif de traitement D selon l'invention. Mais il pourrait ne pas comporter de dispositif de traitement D, ce dernier (D) étant alors implanté dans un autre équipement, comme par exemple un ordinateur fixe ou portable, éventuellement implanté dans un autre lieu que le sien.

Les moyens d'analyse MA comprennent des moyens de génération MG, agencés pour délivrer un faisceau de rayons X destiné à analyser chaque pièce PI par diffraction de rayons X, et des moyens de détection MD agencés pour détecter et analyser les rayons X qui sont diffractés par certaines familles de plans des pièces PI, afin d'obtenir des ensembles Ei de points représentatifs de mesures d'intensité de diffraction I en fonction d'angles de diffraction $\theta$ différents, obtenues pour une direction d'analyse $(\Phi,\Psi)_i$ parmi plusieurs. On comprendra que les différents ensembles de points Ei (ici indicés par la lettre i) correspondent respectivement à différentes directions d'analyse $(\Phi,\Psi)_i$. Les angles $\Phi$ et $\Psi$ définissent une direction d'analyse.

On notera, comme illustré sur la figure 2, que chaque ensemble de points Ei est assimilable à une courbe globale de diffraction CGi qui comporte un pic principal (de diffraction) PP et au moins un épaulement EP, et qu'il s'agit de déterminer au mieux son point d'extrémité (ou extrémum) PEi, puisque c'est lui qui fournit la position angulaire globale de diffraction que l'on recherche. Dans cet exemple non limitatif la courbe globale de diffraction CGi ne comporte qu'un seul épaulement EP dans sa partie gauche, située en amont de son pic central PC. Mais elle pourrait comporter plusieurs (au moins deux) épaulements, éventuellement en amont et en aval de son pic central.

Un dispositif de traitement D, selon l'invention, est agencé pour traiter les ensembles de points Ei d'une pièce PI afin de déterminer une contrainte résiduelle qu'elle comprend. A cet effet, et comme illustré sur la figure 1, il comprend au moins des premier MT1 et second MT2 moyens de traitement, qui peuvent être éventuellement considérés comme deux sous-parties (ou deux modules) d'un moyen de calcul, comme par exemple un calculateur. Par conséquent, le dispositif de traitement D, et notamment ses premier MT1 et second MT2 moyens de traitement, peuvent être réalisés sous la forme de modules logiciels (ou informatiques), ou de circuits électroniques, ou d'une combinaison de circuits électroniques et de modules logiciels.

Comme illustré sur la figure 2, les premiers moyens de traitement MT1 sont tout d'abord agencés pour déterminer pour chaque courbe globale CGi qui est associée à une pièce PI et à une direction d'analyse $(\Phi, \Psi)_i$ une courbe principale CP et au moins une courbe secondaire CS représentatives respectivement du pic central (de diffraction) PC et d'au moins un épaulement EP de cette courbe globale CGi, et dont une convolution reproduit sensiblement cette courbe globale CGi.

En d'autres termes, on considère ici que chaque courbe globale CGi est assimilable à la convolution (au sens mathématique du terme) d'une courbe principale CP, qui représente la principale contribution de la maille cristalline au pic central (de diffraction) PC, et d'au moins une courbe secondaire CS, qui représente la contribution de la déformation de la maille cristalline (ici du fait de son caractère (très) quadratique). Par exemple, dans le cas d'un acier à martensite quadratique, la famille de plans {211} se scinde en familles de plans {211} et {121} qui contribuent au pic principal PC et en une famille de plans {112} qui contribue à l'épaulement EP.

On notera que les premiers moyens de traitement MT1 peuvent être agencés pour utiliser une courbe principale CP qui est construite à partir d'une combinaison d'une courbe de distribution gaussienne et d'une courbe de distribution lorentzienne. Dans ce cas, chaque courbe principale CP peut, par exemple, être une courbe dite « pseudo Voigt » ou une courbe dite « Pearson VII ».

Il est rappelé qu'une courbe pseudo Voigt d'intensité est donnée par l'équation suivante :

$$Intensit\acute{e}(\theta) = \eta * Gauss(I_{max}, \theta_0, \sigma) + (1 - \eta) * Lorentz(I_{max}, \theta_0, \Gamma) ,$$

dans laquelle $\eta$ est une variable d'ajustement comprise entre 0 et 1 afin de permettre le contrôle du caractère plus ou moins gaussien ou lorentzien, Gauss() désigne une courbe de distribution gaussienne, Lorentz() désigne une courbe de distribution lorentzienne, et $\Gamma = 2 * \sqrt{2 * \ln(2)} * \sigma$.

Il est également rappelé qu'une courbe Pearson VII d'intensité est donnée par l'équation suivante :

$$Intensit\acute{e}(\theta) = I_{max} \left( \cfrac{1}{1 + \left( \cfrac{(2\theta - 2\theta_0)}{m * \Gamma / 2} \right)^2} \right)^m ,$$

dans laquelle m est une variable d'ajustement comprise entre 0 et $+\infty$ afin de permettre le contrôle du caractère plus ou moins gaussien ou lorentzien (si m = 1, la courbe Pearson VII est lorentzienne, et si m $\to$ $+\infty$ la courbe Pearson VII est gaussienne), et

On notera également que les premiers moyens de traitement MT1 peuvent être agencés pour utiliser une courbe secondaire CS qui est construite à partir d'une combinaison d'une courbe de distribution gaussienne et d'une courbe de distribution lorentzienne. Dans ce cas, chaque courbe secondaire CS peut, par exemple, être une courbe pseudo Voigt ou une courbe Pearson VII.

Dans l'exemple non limitatif illustré sur la figure 2, les courbes principale CP et secondaire CS sont toutes les deux de type pseudo Voigt. Mais l'une pourrait être de type pseudo Voigt et l'autre de type Pearson VII, ou bien elles pourraient être toutes les deux de type Pearson VII.

Le type de chaque courbe est choisi en fonction du résidu que sa simulation offre par rapport à un ensemble de points Ei. Plus précisément, on choisit celui qui offre le résidu le plus faible, par exemple en utilisant la méthode des moindres carrés.

Une fois que les premiers moyens de traitement MT1 ont déterminé les courbes principale CP et secondaire(s) CS, qui une fois convoluées définissent une courbe globale CGi, ils déterminent le point d'extrémité (ou extrémum) PEi de cette courbe globale CGi. On entend ici par « point d'extrémité (ou extrémum) » un point d'une courbe globale CGi qui est défini par une position angulaire globale de diffraction $2\theta_i$ à laquelle correspond une valeur maximale d'intensité de diffraction $I_{max}(CGi)$.

Il est rappelé qu'il est traditionnel dans le domaine de la diffraction par rayons X d'utiliser comme paramètre (d'abscisse) le double de l'angle de diffraction θ, plutôt que ce dernier (θ).

Selon l'invention, la position angulaire globale de diffraction 2θi d'une courbe globale CGi est celle à laquelle correspond une valeur maximale d'intensité de diffraction $I_{max}$(CGi) du point d'extrémité (ou extrémum) PEi de cette courbe globale CGi, laquelle est obtenue (ou déterminée) à partir d'une combinaison pondérée des valeurs maximales d'intensité de diffraction respectivement des courbe principale CP et courbe(s) secondaire(s) CS qui définissent par convolution cette courbe globale CGi.

Par exemple, les premiers moyens de traitement MT1 peuvent être agencés pour calculer des première S1 et seconde(s) S2 surfaces qui sont inscrites respectivement sous les courbe principale CP et courbe(s) secondaire(s) CS associées une courbe globale CGi. Puis, ils déterminent chaque valeur maximale d'intensité de diffraction $I_{max}$(CGi) en effectuant la somme, d'une part, de la valeur maximale d'intensité de diffraction $I_{max}$(CP) de la courbe principale CP multipliée par le résultat de la division de la première surface S1 par la somme des première S1 et seconde(s) S2 surfaces, soit (ici) $I_{max}$(CP)*S1/(S1+S2), et, d'autre part, de chaque valeur maximale d'intensité de diffraction $I_{max}$(CS) de chaque courbe secondaire CS multipliée par le résultat de la division de la seconde surface S2 correspondante par la somme des première S1 et seconde(s) S2 surfaces, soit (ici) $I_{max}$(CS)*S2/(S1+S2).

On a donc ici la relation :

$$I_{max}(CGi) = I_{max}(CP)*S1/(S1+S2) + I_{max}(CS)*S2/(S1+S2),$$

et plus généralement :

$$I_{max}(CGi) = I_{max}(CP)*S1/(S1+\sum_{n=1}^{N}S2_n) + \sum_{n=1}^{N}I_{max}(CS_n)*S2_n/(S1+\sum_{n=1}^{N}S2_n),$$

où n désigne l'une des N courbes secondaires, avec N ≥ 1.

On notera que d'autres méthodes de détermination de la valeur maximale d'intensité de diffraction $I_{max}$(CGi) du point d'extrémité (ou extrémum) PEi d'une courbe globale CGi, et donc de la position angulaire globale de diffraction 2θi, peuvent être utilisées, dès lors qu'elles comportent au moins une combinaison pondérée des valeurs maximales d'intensité de diffraction respectivement des courbe principale CP et courbe(s) secondaire(s) CS qui définissent par convolution cette courbe globale CGi.

Une fois que les premiers moyens de traitement MT1 ont déterminé la valeur maximale d'intensité de diffraction $I_{max}$(CGi) du point d'extrémité (ou extrémum) PEi d'une courbe globale CGi, ils en déduisent la position angulaire globale de diffraction 2θi. Puis, ils déterminent un paramètre de déformation $\varepsilon_{\Phi,\Psi i}$ de la pièce PI concernée dans la direction d'analyse $(\Phi,\Psi)_i$ à partir de la position angulaire globale de diffraction déterminée 2θi.

On notera que les premiers moyens de traitement MT1 procèdent comme indiqué ci-avant pour chaque direction d'analyse $(\Phi,\Psi)_i$ afin de disposer au final des valeurs $\varepsilon_{\Phi,\Psi i}$ du paramètre de déformation de la pièce PI dans chacune des directions d'analyse $(\Phi,\Psi)_i$.

Les seconds moyens de traitement MT2 sont agencés pour déterminer une contrainte résiduelle $\sigma_\Phi$ de la pièce PI à partir des valeurs $\varepsilon_{\Phi,\Psi i}$ du paramètre de déformation déterminées dans chacune des directions d'analyse $(\Phi,\Psi)_i$ des ensembles de points Ei obtenus pour cette pièce PI.

Pour ce faire, ils utilisent la méthode des $\sin^2\Psi$ qui consiste :

- à placer dans un graphe les points $(\varepsilon_{\Phi,\Psi i}, \sin^2\Psi i)$ qui correspondent aux différentes directions d'analyse $(\Phi,\Psi)_i$ et qui comprennent chacun la valeur du paramètre de déformation $\varepsilon_{\Phi,\Psi i}$ déterminée dans la direction d'analyse $(\Phi,\Psi)_i$ et la valeur de $\sin^2\Psi i$ associée, puis
- à déterminer la pente de l'ellipse qui passe par la plupart de ces points $(\varepsilon_{\Phi,\Psi i}, \sin^2\Psi i)$, puis
- à déterminer la contrainte résiduelle $\sigma_\Phi$ de la pièce PI en fonction de cette pente d'ellipse.

Grâce à l'invention, les valeurs des contraintes résiduelles déterminées sur une même pièce PI, en différents endroits ayant subi un même traitement (éventuellement de précontrainte), sont beaucoup moins dispersées que lorsque l'on utilise une technique de l'art antérieur. En outre, les valeurs des contraintes résiduelles déterminées grâce à l'invention s'avèrent plus réalistes que lorsque l'on utilise une technique de l'art antérieur. Cela résulte du fait que l'invention permet d'obtenir une dispersion des points $(\varepsilon_{\Phi,\Psi i}, \sin^2\Psi i)$ par rapport à l'ellipse qui est inférieure ou égale à environ 10 % de la valeur de la contrainte résiduelle correspondante, alors qu'en utilisant une technique de l'art antérieur la dispersion des points $(\varepsilon_{\Phi,\Psi i}, \sin^2\Psi i)$ par rapport à l'ellipse peut atteindre 300% de la valeur de la contrainte résiduelle.

On notera par ailleurs que l'invention permet de mieux comprendre la corrélation entre la tenue mécanique des pièces et leur microstructure en présence de contraintes résiduelles, et donc d'optimiser la mise au point des procédés de fabrication des pièces avant de passer à une phase de production industrielle en usine.

L'invention ne se limite pas aux modes de réalisation de dispositif de traitement et d'appareil d'analyse décrits ci-avant, seulement à titre d'exemple, mais elle englobe toutes les variantes que pourra envisager l'homme de l'art dans le cadre des revendications ci-après.

**Revendications**

1. Dispositif (D) de traitement d'ensembles (Ei) de points représentatifs de mesures d'intensité de diffraction en fonction d'angles de diffraction différents, obtenues pour une direction d'analyse parmi plusieurs sur une pièce (PI) réalisée dans un matériau cristallin et présentant des contraintes résiduelles résultant d'un traitement, chaque ensemble (Ei) étant assimilable à une courbe globale de diffraction (CGi) comportant un pic principal (PP) et au moins un épaulement (EP), **caractérisé en ce qu'**il comprend a) des premiers moyens de traitement (MT1) agencés pour déterminer pour chaque courbe globale (CGi) associée à une pièce (PI) et à une direction d'analyse i) une courbe principale (CP) et au moins une courbe secondaire (CS) représentatives respectivement du pic central (PC) et d'au moins un épaulement (EP) de cette courbe globale (CGi), et dont une convolution reproduit sensiblement cette courbe globale (CGi), ii) un point d'extrémité (PEi) de ladite courbe globale (CGi), défini par une position angulaire globale de diffraction à laquelle correspond une valeur maximale d'intensité de diffraction obtenue à partir d'une combinaison pondérée des valeurs maximales d'intensité de diffraction respectivement des courbe principale (CP) et courbe(s) secondaire(s) (CS) associées, et iii) un paramètre de déformation de ladite pièce (PI) dans ladite direction d'analyse à partir de ladite position angulaire globale de diffraction déterminée, et b) des seconds moyens de traitement (MT2) agencés pour déterminer une contrainte résiduelle de ladite pièce (PI) à partir de ses paramètres de déformation déterminés dans chacune desdites directions d'analyse desdits ensembles (Ei).

2. Dispositif selon la revendication 1, **caractérisé en ce que** lesdits premiers moyens de traitement (MT1) sont agencés pour utiliser une courbe principale (CP) construite à partir d'une combinaison d'une courbe de distribution gaussienne et d'une courbe de distribution lorentzienne.

3. Dispositif selon la revendication 2, **caractérisé en ce que** lesdits premiers moyens de traitement (MT1) sont agencés pour utiliser une courbe principale (CP) choisie dans un groupe comprenant au moins des courbes dites « pseudo Voigt » et des courbes dites « Pearson VII».

4. Dispositif selon l'une des revendications 1 à 3, **caractérisé en ce que** lesdits premiers moyens de traitement (MT1) sont agencés pour utiliser une courbe secondaire (CS) construite à partir d'une combinaison d'une courbe de distribution gaussienne et d'une courbe de distribution lorentzienne.

5. Dispositif selon la revendication 4, **caractérisé en ce que** lesdits premiers moyens de traitement (MT1) sont agencés pour utiliser une courbe secondaire (CS) choisie dans un groupe comprenant au moins des courbes dites « pseudo Voigt » et des courbes dites « Pearson VII ».

6. Dispositif selon l'une des revendications 1 à 5, **caractérisé en ce que** lesdits premiers moyens de traitement (MT1) sont agencés pour calculer des première et seconde(s) surfaces inscrites respectivement sous lesdites courbe principale (CP) et courbe(s) secondaire(s) (CS) associées à une courbe globale (CGi), puis pour déterminer chaque valeur maximale d'intensité de diffraction, correspondant à ladite position angulaire globale de diffraction, en effectuant la somme, d'une part, de la valeur maximale d'intensité de diffraction de ladite courbe principale (CP) multipliée par le résultat de la division de ladite première surface par la somme desdites première et seconde(s) surfaces, et, d'autre part, de chaque valeur maximale d'intensité de diffraction de chaque courbe secondaire (CS) multipliée par le résultat de la division de ladite seconde surface correspondante par la somme desdites première et seconde(s) surfaces.

7. Appareil (AA) d'analyse de pièces (PI) réalisées dans un matériau cristallin et présentant des contraintes résiduelles résultant d'un traitement, ledit appareil (AA) comprenant des moyens d'analyse (MA) agencés pour analyser chaque pièce (PI) par diffraction de rayons X afin d'obtenir des ensembles (Ei) de points représentatifs de mesures d'intensité de diffraction en fonction d'angles de diffraction différents, obtenues pour une direction d'analyse parmi plusieurs, **caractérisé en ce qu'**il comprend en outre un dispositif de traitement (D) selon l'une des revendications précédentes propre à traiter les ensembles de points (Ei) de chaque pièce (PI) afin de déterminer une contrainte résiduelle qu'elle comprend.

8. Appareil selon la revendication 7, **caractérisé en ce qu'**il est propre à analyser des pièces (PI) ayant subi un traitement compris dans un groupe comprenant au moins une carbonitruration à basse pression, une carbonitruration à pression atmosphérique, une cémentation à basse pression, une cémentation à pression atmosphérique, et un grenaillage de précontrainte.

9. Appareil selon l'une des revendications 7 et 8, **caractérisé en ce qu'**il est propre à analyser des pièces (PI) en acier.

10. Appareil selon l'une des revendications 7 à 9, **caractérisé en ce qu'**il est propre à analyser des pièces (PI) destinées à équiper des véhicules.


**Patentansprüche**

1. Vorrichtung (D) zur Behandlung von Einheiten (Ei) von Punkten, die für Messungen der Streustärke in Abhängigkeit von unterschiedlichen Streuwinkeln repräsentativ sind, die für eine Analyserichtung von mehreren auf einem Teil (PI) erhalten werden, das aus einem kristallinen Werkstoff hergestellt ist und Restspannungen aufweist, die aus einer Behandlung resultieren, wobei jede Einheit (Ei) einer globalen Streukurve (CGi) gleichgestellt werden kann, die einen Hauptpeak (PP) und mindestens einen Ansatz (EP) umfasst, **dadurch gekennzeichnet, dass** sie a) erste Verarbeitungsmittel (MT1) umfasst, die eingerichtet sind, um für jede globale Kurve (CGi), die zu einem Teil (PI) und eine Analyserichtung i) gehört, eine Hauptkurve (CP) und mindestens eine Sekundärkurve (CS), die jeweils für den zentralen Peak (PC) und mindestens einen Ansatz (EP) dieser globalen Kurve (CGi) repräsentativ sind, und von welcher eine Falte diese globale Kurve (CGi) im Wesentlichen nachvollzieht, ii) einen Endpunkt (PEi) der globalen Kurve (CGi), die durch eine globale Streuwinkelposition definiert ist, der ein maximaler Streustärkewert entspricht, der ausgehend von einer gewichteten Kombination der maximalen Streustärken jeweils der Hauptkurve (CP) und der dazugehörenden Sekundärkurve(n) (CS) erhalten wird, und iii) einen Verformungsparameter des Teils (PI) in die Analyserichtung ausgehend von der bestimmten globalen Streuwinkelposition zu bestimmen, und b) zweite Verarbeitungsmittel (MT2), die eingerichtet sind, um eine Restspannung des Teils (PI) ausgehend von seinen Verformungsparametern, die in jede der Analyserichtungen der Einheiten (Ei) bestimmt werden, zu bestimmen.

2. Vorrichtung nach Anspruch 1, **dadurch gekennzeichnet, dass** die ersten Verarbeitungsmittel (MT1) eingerichtet sind, um eine Hauptkurve (CP) zu verwenden, die ausgehend von einer Kombination aus einer gaußschen Verteilungskurve und einer Lorentz-Verteilungskurve aufgebaut ist.

3. Vorrichtung nach Anspruch 2, **dadurch gekennzeichnet, dass** die ersten Verarbeitungsmittel (MT1) eingerichtet sind, um eine Hauptkurve (CP) zu verwenden, die aus einer Gruppe ausgewählt ist, die mindestens sogenannte "Pseudo-Voigt"-Kurven und sogenannte "Pearson VII"-Kurven umfasst.

4. Vorrichtung nach einem der Ansprüche 1 bis 3, **dadurch gekennzeichnet, dass** die ersten Verarbeitungsmittel (MT1) eingerichtet sind, um eine Sekundärkurve (CS) zu verwenden, die ausgehend von einer Kombination aus einer gaußschen Verteilungskurve und einer Lorentz-Verteilungskurve aufgebaut ist.

5. Vorrichtung nach Anspruch 4, **dadurch gekennzeichnet, dass** die ersten Verarbeitungsmittel (MT1) eingerichtet sind, um eine Sekundärkurve (CS) zu verwenden, die aus einer Gruppe ausgewählt ist, die mindestens sogenannte "Pseudo-Voigt"-Kurven und sogenannte "Pearson VII"-Kurven umfasst.

6. Vorrichtung nach einem der Ansprüche 1 bis 5, **dadurch gekennzeichnet, dass** die ersten Verarbeitungsmittel (MT1) eingerichtet sind, um erste und zweite Oberflächen zu berechnen, die jeweils unter die Hauptkurve (CP) und die Sekundärkurve(n) (CS), die zu einer globalen Kurve (CGi) gehören, fallen, dann um jeden maximalen Streustärkewert, der der globalen Streuwinkelposition entspricht, zu bestimmen, indem die Summe einerseits des maximalen Streustärkewerts der Hauptkurve (CP) multipliziert mit dem Resultat der Division der ersten Oberfläche durch die Summe der ersten und zweiten Oberfläche(n) gebildet wird, und andererseits jedes maximalen Streustärkewerts jeder Sekundärkurve (CS) multipliziert mit dem Resultat der Division der zweiten entsprechenden Oberfläche durch die Summe der ersten und zweiten Oberfläche.

7. Analysegerät (AA) von Teilen (PI), die aus einem kristallinen Material hergestellt sind und Restspannungen aufweisen, die aus einer Behandlung resultieren, wobei das Gerät (AA) Analysemittel (MA) umfasst, die eingerichtet sind, um jedes Teil (PI) durch Röntgenstrahlstreuung zu analysieren, um Einheiten (Ei) von Punkten zu erhalten, die für Streustärkemessungen in Abhängigkeit von unterschiedlichen Streuwinkeln, die für eine Analyserichtung von mehreren erhalten werden, repräsentativ sind, **dadurch gekennzeichnet, dass** es außerdem eine Verarbeitungsvorrichtung (D) nach einem der vorhergehenden Ansprüche umfasst, die geeignet ist, um die Punkteeinheiten (Ei) jedes Teils (PI) zu verarbeiten, um eine Restspannung, die es umfasst, zu bestimmen.

8. Gerät nach Anspruch 7, **dadurch gekennzeichnet, dass** es geeignet ist, um Teile (PI) zu analysieren, die eine Behandlung erhalten haben, die in einer Gruppe enthalten ist, die mindestens eine Niederdruck-Carbonitrierung, eine Carbonitrierung bei Luftdruck, eine Niederdruck-Zementierung, eine Zementierung bei Luftdruck und ein Vorspannungs-Kugelstrahlen umfasst.

9. Gerät nach einem der Ansprüche 7 und 8, **dadurch gekennzeichnet, dass** es geeignet ist, Teile (PI) aus Stahl zu analysieren.

10. Gerät nach einem der Ansprüche 7 bis 9, **dadurch gekennzeichnet, dass** es geeignet ist, Teile (PI), die zum Ausstatten der Fahrzeuge bestimmt sind, zu analysieren.


**Claims**

1. A device (D) for processing sets (Ei) of points which are representative of measurements of diffraction intensity as a function of different diffraction angles, obtained for one direction of analysis among several on a part (PI) made from a crystalline material and having residual stresses resulting from a processing, each set (Ei) being able to be assimilated to an overall diffraction curve (CGi) comprising a main peak (PP) and at least one shoulder (EP), **characterized in that** it includes a) first processing means (MT1) arranged for determining for each overall curve (CGi) associated with a part (PI) and with a direction of analysis, i) a main curve (CP) and at least one secondary curve (CS) representative respectively of the central peak (PC) and of at least one shoulder (EP) of this overall curve (CGi), and a convolution of which reproduces substantially this overall curve (CGi), ii) an end point (PEi) of said overall curve (CGi), defined by an overall angular position of diffraction to which there corresponds a maximum diffraction intensity value obtained from a weighted combination of the maximum diffraction intensity values respectively of the main curve (CP) and associated secondary curve(s) (CS), and iii) a parameter of deformation of said part (PI) in said direction of analysis from said determined overall angular position of diffraction, and b) second processing means (MT2) arranged for determining a residual stress of the said part (PI) from its deformation parameters determined in each of the said directions of analysis of the said sets (Ei).

2. The device according to claim 1, **characterized in that** said first processing means (MT1) are arranged for using a main curve (CP) constructed from a combination of a Gaussian distribution curve and a Lorentzian distribution curve.

3. The device according to claim 2, **characterized in that** said first processing means (MT1) are arranged for using a main curve (CP) selected in a group including at least curves designated "pseudo-Voigt" and curves designated "Pearson VII".

4. The device according to one of claims 1 to 3, **characterized in that** said first processing means (MT1) are arranged for using a secondary curve (CS) constructed from a combination of a Gaussian distribution curve and a Lorentzian distribution curve.

5. The device according to claim 4, **characterized in that** said first processing means (MT1) are arranged for using a secondary curve (CS) selected in a group including at least curves designated "pseudo-Voigt" and curves designated "Pearson VII".

6. The device according to one of claims 1 to 5, **characterized in that** said first processing means (MT1) are arranged for calculating first and second area(s) entered respectively under the said main curve (CP) and secondary curve(s) (CS) associated with an overall curve (CGi), then for determining each maximum diffraction intensity value, corresponding to said overall angular position of diffraction, by effecting the sum, on the one hand, of the maximum diffraction intensity value of said main curve (CP) multiplied by the result of the division of said first area by the sum of said first and second surface (s), and, on the other hand, of each maximum diffraction intensity value of each secondary curve (CS) multiplied by the result of the division of said second corresponding area by the sum of said first and second surface(s).

7. An apparatus (AA) for analysis of parts (PI) made from a crystalline material and having residual stresses resulting from a processing, said apparatus (AA) including analysis means (MA) arranged for analysing each part (PI) by X-ray diffraction so as to obtain sets (Ei) of points which are representative of measurements of diffraction intensity as a function of different diffraction angles, obtained for one direction of analysis amongst several, **characterized in that** it further includes a processing device (D) according to one of the preceding claims, suitable for processing the sets of points (Ei) of each part (PI) so as to determine a residual stress that it includes.

8. The apparatus according to claim 7, **characterized in that** it is suitable for analysing parts (PI) having undergone a processing included in a group including at least one low pressure carbonitriding, a carbonitriding at atmospheric pressure, a low pressure cementation, a cementation at atmospheric pressure, and a prestress shot-blasting.

9. The apparatus according to one of claims 7 and 8, **characterized in that** it is suitable for analysing parts (PI) made of steel.

10. The apparatus according to one of claims 7 to 9, **characterized in that** it is suitable for analysing parts (PI) intended to equip vehicles.

FIG.1

FIG.2